# EUROPEAN PATENT SPECIFICATION

(11) **EP 2 183 478 B1**
(45) Date of publication and mention of the grant of the patent: **07.03.2018**
(21) Application number: 07793976.7
(22) Date of filing: 16.08.2007
(51) Int. Cl.: F03B 13/18

(54) **SYSTEM FOR CONVERSION OF WAVE ENERGY INTO ELECTRICAL ENERGY**
VORRICHTUNG ZUR UMWANDLUNG VON WELLENKRAFT IN ELEKTRISCHE ENERGIE
SYSTÈME POUR CONVERTIR L'ÉNERGIE DES VAGUES EN ÉNERGIE ÉLECTRIQUE

(30) Priority: 13.08.2007 RS 7034607
(43) Date of publication of application: 12.05.2010
(73) Proprietor: Dragic, Mile, Zrenjanin 23000 (RS)
(72) Inventor: Dragic, Mile, Zrenjanin 23000 (RS)
(74) Representative: Ribeiro, James Michael
(86) International application number: PCT/RS2007/000015
(87) International publication number: WO 2009/022930

(56) References cited:
- WO-A-2005/012723
- WO-A-2007/042793
- WO-A-2007/125307
- CA-A1- 2 436 187
- DE-A1- 2 934 288
- DE-A1- 19 515 138
- FR-A- 459 312
- FR-A- 538 736
- FR-A- 655 131
- FR-A- 872 125
- GB-A- 191 315 279
- JP-A- 61 226 572
- US-A- 1 497 205
- US-A- 1 711 103
- US-A- 1 816 044
- US-A- 2 749 085
- US-A- 2 783 022
- US-A- 4 389 843
- US-A- 4 672 222
- US-B1- 6 208 035

## Description

### Technical Field

The present disclosure relates, generally, to the utilization of energy from waves and converting the linear motion of waves into operating motion of a generator which then produces electricity. According to the present disclosure, this system uses a floating working body for conversion of linear motion of aquatic waves either into circular or linear motion of the generator.

The present disclosure answers the following question: What is the most practical solution for construction of a system for converting the wave energy into electrical energy?

### Background Art

Modem systems for electrical energy production are very expensive, and many of them use unrenewable fossil fuels and pollute the environment a great deal. The Planet is endangered by the global warming and the greenhouse effect. This leads to the question of electrical energy production by utilization of the natural, renewable wave energy.

Today the wave energy is not used for production of electrical energy, except experimentally. Power plants are limited by the amount of available ore used as operating force for turbines and at the same time they are big environmental pollutants. Nuclear power plants are large energy sources but they can be very dangerous if they get damaged (Chernobyl and some plants in the USA, for example). By emitting large amounts of water vapour into atmosphere they increase global pollution; there is also a very serious problem with the nuclear waste disposal.

Alternatively, electricity is produced in electric plants built on river and lake dams. However the construction of those plants is complex and expensive. Costal countries cannot use this source for electricity production. The only solution for these countries is utilization of wave energy.

Previous attempts of utilization of wave energy for electricity production have not succeeded due to some particular disadvantages and have not been put in practice.

The American patent # 1, 393, 472 from the year 1921 was an attempt to use the wave energy to shift a platform up and down in a very complex way with a large number of gears that used to cause great energy loss. This resulted in extremely low power on the outlet. Because of limited free motion of the platform, possible jamming, bumping and accidence, this patent was never put in practice. The engine of this patent consists of numerous parts and the platform is very heavy with substantial inertia.

There were also some other attempts, such as the US patent #5, 710, 464 from 1998, which is an interesting example of utilization of energy from waves for the operation of the pumps for electrical generator supply. In this invention pumps drove sea water through pipes to electrical generator which generated electricity.

Likewise, both US patents # 4, 232, 230 and # 4, 672, 222 were the attempts to produce electrical energy by use of linear motion of electromagnets. But the costs of the spare parts production were high; the maintenance was expensive and complex because the induction generator was below water surface which increased the production and exploitation costs. US1816044 and US2783022 disclose a wave power generating system with floating body connected to a vertical transmission shaft. Compared to previous patents, these were certainly much better, but yet uncompleted.

In comparison to previous inventions this is an advanced invention because maximal water power is utilized and conversed into electrical energy with minimal losses in the transmission system. By mutually positioned and arranged sets of floating bodies maximal energy of aquatic waves is utilized and the sea is "ironed".

The induction coil magnet is directly connected to the floating bodies. With the arrangement with rotary generator minimal losses in the transmission system are obtained by use of one-way clutches,

### Disclosure of the Invention

Presenter invention is a system, according to claim 1 for producing electrical energy which enables great efficiency in conversion of aquatic wave motion into electrical generator motion. Devices and components necessary for assembling the system are well-known, cheap and can be made or collected in economical production.

In contrast to the previously mentioned US patents # 4, 232, 230 and # 4,672, 222 where the induction generators are positioned under water surface, in our invention the induction generator is positioned above the water surface, above the floating working body, for example, not below the floating working body as in the US patents mentioned above.

The present energy generating system includes a floating body, a transmission shaft, units for fixing the system to the sea bottom, a beam with devices for producing electrical energy. Contrary to the US patent 1, 393, 472 the system for electrical energy production is not positioned on the floating body, but on the fixed columns. This way the system for conversion of the linear motion of the floating body into rotary motion is much simpler, with less machine parts; with one-way clutches that transmit rotating moment only in one direction, not the opposite one. There are no similarities between our invention and other mentioned patents.

The floating body floats on the water and is placed between fixed parts (two or three columns) and, under the action of the waves, moves up and down. The transmission shaft, which can be flexible or inflexible, is fixed to the floating body. The transmission shaft transmits motion to the generator for electrical energy production. Electrical energy can be produced either by use of an induction coil or a generator,

The motion of the magnet in the induction coil is directly related to the motion of the floating body either through the flexible transmission shaft or through inflexible transmission shaft. The induction coil is placed above the water surface and above the working body. In this arrangement, this is the simplest way of electrical energy production.

The energy generating system produces electrical energy by allowing the floating body to move up and down under the action of the waves. Since the floating body is directly connected to the generator by the transmission shaft it causes linear motion of the magnet in the induction coil to produce electrical energy. Alternatively, the linear motion of the transmission shaft can be converted into circular motion by a rotary generator.

With the generator system the motion or the floating body is converted into circular motion in a very simple way with minimal losses in the transmission system and minimal number of machine parts of the generator for producing electrical energy.

### Brief Description of the Drawings

The present invention and the advantages thereof will become more apparent upon consideration of the following detailed description when taken in conjunction with the accompanying drawings of which:
Fig. 1 shows the system for electrical energy production with the light floating body according to this invention.
Fig. 2 is a schematic display of the energy generating system of Fig. 1 moving under the influence of the waves.
Fig. 3 is an embodiment of the system of Fig. 1 showing its front side in cross section.
Fig. 3a is a perspective view of the energy generating system of Fig. 3
Fig. 3b shows an axonometric section of a field of energy generating system and one variation of positioning floating bodies in the direction of the waves.
Fig. 3c is atop view of one of the possible arrangements of the floating bodies placed on the water surface.
Fig. 4 is an axonometric view with a partial cross section of another embodiment of the energy generating system of Fig. 1 with the generator for electrical energy production.
Fig. 5 is an enlarged axonometric view of the energy generating system of Fig. 4, i.e. basic devices for conversion of linear motion into circular motion and its transmission to the generator.
Fig. 6 is an axonometric view with a partial cross section of another embodiment of the energy generating system of Fig. 1. The system of Figure 6 is not an embodiment of the invention.
Fig. 6a is an axonometric view with a partial cross section of another embodiment of the energy generating system of Fig. 6. The system of Figure 6a is not an embodiment of the invention.
Fig. 7 is an axonometric view of the energy generating system of Fig. 4 with a large floating body. The system of Figure 7 is not an embodiment of the invention.
Fig. 7a is a side view of the energy generating system of Fig. 7. The system of Figure 7a is not an embodiment of the invention.
Fig. 7b shows an axonometric view of the energy generating system of Fig.7 with pulleys with flexible transmission shafts positioned above the water surface. The system of Figure 7b is not an embodiment of the invention.
Fig. 7c is an enlarged axonometric view of electrical energy generating system secured on the energy generating systems of Fig. 7, 7a and 7b. The system of Figure 7c is not an embodiment of the invention.
Fig. 8a shows an axonometric way of positioning of the previous energy generating system in the direction of wave motion. The system of Figure 8a is not an embodiment of the invention.
Fig. 8b is atop view of the energy generating system of Fig. 8a. The system of Figure 8b is not an embodiment of the invention.
Fig. 9 shows an axonometric combination of a large floating body and induction coils used as energy converters. The system of Figure 9 is not an embodiment of the invention.
Fig. 10a is a front, cross sectional view showing the shape of the floating body with the matched devices for shorter waves. The system of Figure 10a is not an embodiment of the invention.
Fig, 10b is a top view of the electrical energy generating system of Fig. 10a. The system of Figure is 10b not an embodiment of the invention.
Fig. 11 is an axonometric view showing electrical energy production by means of a large floating body with overhangs coupled to the racks. The system of Figure 11 is not an embodiment of the invention.
Fig. 11a is an axonometric view showing a portion A of Fig. 11. The system of Figure 11a is not an embodiment of the invention.
Fig. 11b is a side elevational view of the floating body with the electrical energy generating system. The system of Figure 11b is not an embodiment of the invention.
Fig.11c is a side view of the floating body with a bracket and an inflexible transmission shaft with the electrical energy generating system. The system of Figure 11c is not an embodiment of the invention.
Fig. 11d is a top view of the floating body. The system of Figure 11d is not an embodiment of the invention.
Fig. 11e shows a detail A of Fig. 11d. The system of Figure 11e is not an embodiment of the invention.
Fig, 11f is a perspective view of the device of Fig, 11g. The device of Figure 11f is not an embodiment of the invention.
Fig. 11g is a top view of the device that converts the two-way operating motion into rotation of a spindle in the same direction by means of external gearing. The device of Figure 11g is not an embodiment of the invention.
Fig. 12 is an axonometric view a portion of the floating body with a fixed transmission shaft positioned on the floating body and the electrical energy generating system. The system of Figure 12 is not an embodiment of the invention.
Fig. 12a is a sectional view of the portion of Fig. 12. The system of Figure 12a is not an embodiment of the invention.
Fig, 12b is a sectional view of a floating body and a flexible transmission shaft connection. The system of Figure 12b is not an embodiment of the invention.
Fig.12c is an enlarged sectional view of a portion A of Fig.12a. The system of Figure 12c is not an embodiment of the invention.
Fig.12d is enlarged sectional view of a portion B of Fig.12b. The system of Figure 12d is not an embodiment of the invention.
Fig. 13 is a perspective view of a portion of the electrical energy generating system without inflexible supports in the sea-bed. The system of Figure 13 is not an embodiment of the invention.
Fig. 13a is a front, sectional view of the upper position of the floating bodies under action of the waves. The floating bodies of Figure 13a are not an embodiment of the invention.
Fig. 13b shows a front, sectional view of the lower position of the floating bodies under action of the waves. The system of Figure 13b is not an embodiment of the invention.
Fig. 14 is a perspective view of the supporting beam 8 with the electrical energy generating system. The system of Figure 14 is not an embodiment of the invention.

### Detailed Description

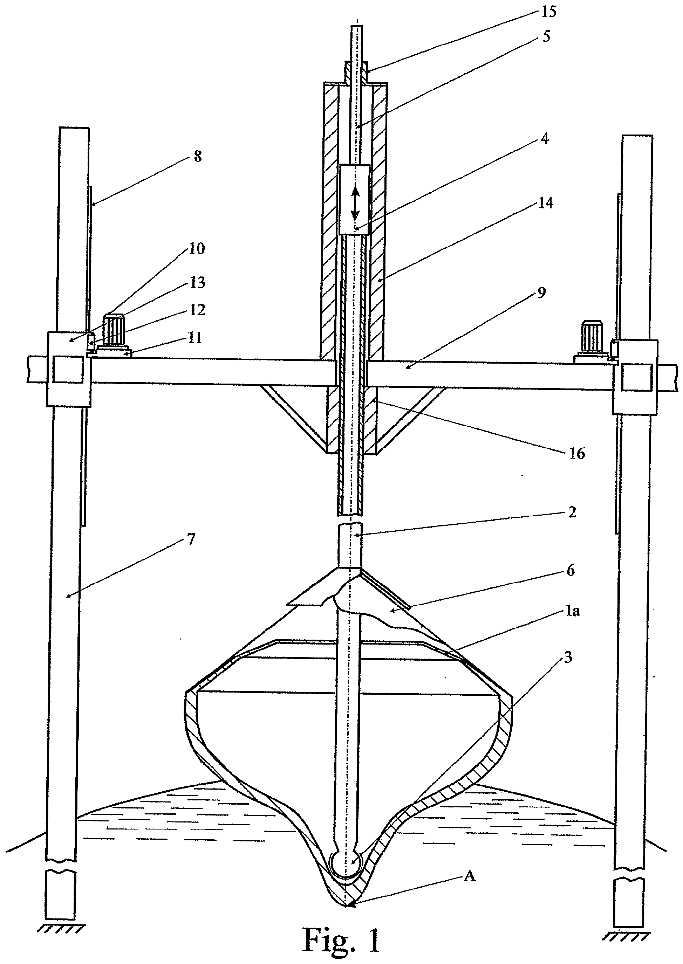

Fig. 1 is a perspective view of the energy generating system with a light floating body 1a, according to the invention. In illustrative embodiments, the energy generating system includes two columns 7 secured to the bottom of the sea on one of its ends, and with the mechanism for moving the beam 9, on the other, free end. By use of guides on the basic column 13, the columns are coupled to a vertical beam 9 which is parallel to the water surface. To compensate for changes in tide, on the beam 9, a mechanism is used. The mechanism includes an electromotor 10, a reducer 11, a jack-screw 12 and a geared lath 8 which is coupled to the column 7. This mechanism, measured and controlled by a computer, lifts and lowers the beam 9. This is important for the areas where the difference in tide altitude is significant. This way the transmission shaft 2 does not have to be extremely long. By this system the oscillation of the magnet 4 around the central position of the induction coil 14 can be roughly kept. In the areas where the difference in tide altitude is minimal, the beam 9 can be fixed in relation to the columns 7. Fine alignment of the magnet is obtained by a lead-screw 5 which is swerved by use of a lead-screw drive 15. Magnet 4 starts moving in relation to the rod 2 when it gets drive from the lead screw 5. The motion of the magnet 4 should be monitored and supported by a computer.

In order to achieve permanent position of the transmission shaft 2 a bearing 16 is added. The transmission shaft passes through the bearing which accepts the lateral forces and enables proper leading of the magnet inside the induction coil

An innovation which provides minimal lateral forces on the transmission shaft 2 is introduced in this invention. The transmission shaft 2 is coupled to the floating, body, below the central point of displacement by use of a hinge. Floating body 1a, in this embodiment, circular in cross section, takes free position in relation to the transmission shaft 2 and the buoyancy forces on the left and right sides of the transmission shaft are equal, so there is no lateral load on the transmission shaft. The upper part of the floating body is free and the contact between the floating body and the transmission shaft 2 must be avoided. In order to prevent water from entering into the floating body and to enable free shift of the floating body in relation to the transmission shaft 2, a waterproof, flexible membrane 6 is used. The way of securing of the membrane 6 to the floating body on the one side, and to the transmission shaft 2 on the other side, is well-known. Floating body should be as light as possible, so it is manufactured from lightweight materials such as a glass-fiber and plastic combination or fabricated from pneumatic balloons. Operating mode: floating body rises when waves approach and vertical motion of the floating body is transmitted to a magnet 4 in the induction coil 14 by a transmission shaft 2. Electrical energy is generated inside the induction coil by motion of the magnet. Depending on the size of the floating body, the linear generator (magnet and induction coil) and the consumer are sized-up. It has to be taken into consideration that the working stroke is when the floating body shifts vertically upwards, and when the floating body shifts vertically downwards, the linear generator has to be unloaded to enable floating body to move downwards and follow the motion of the waves.

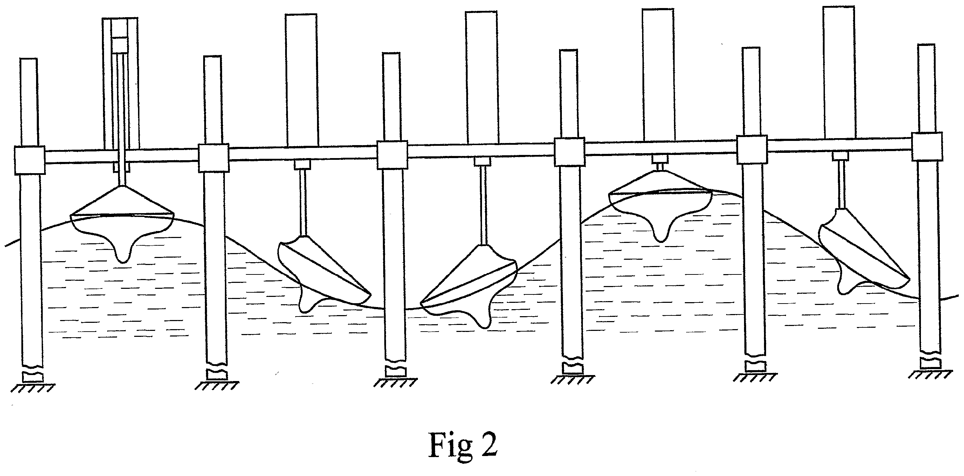

Fig. 2 is a schematic view showing vertical motion of the floating body under action of waves.

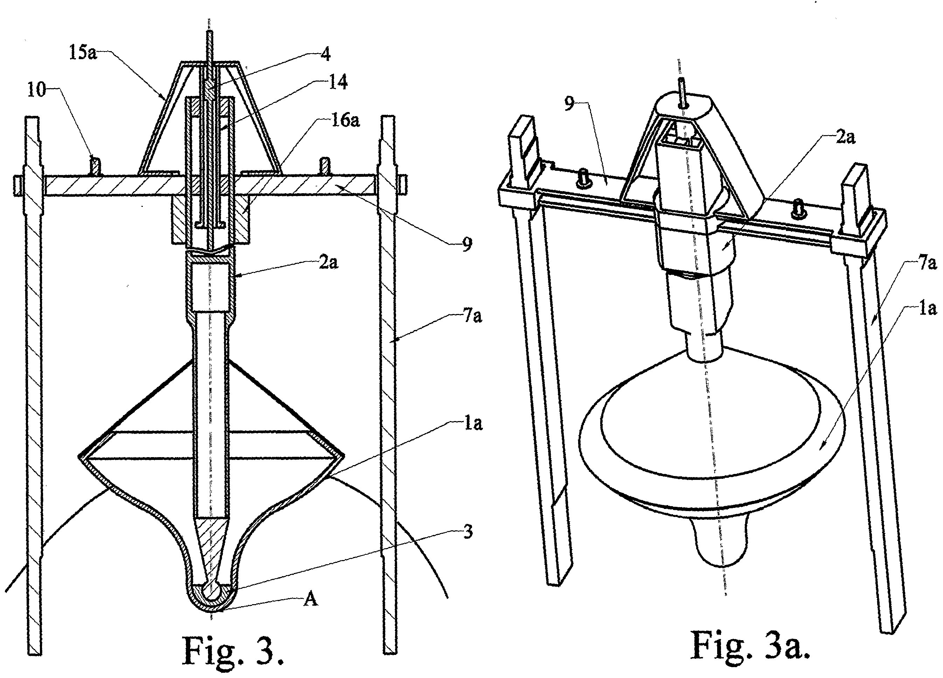

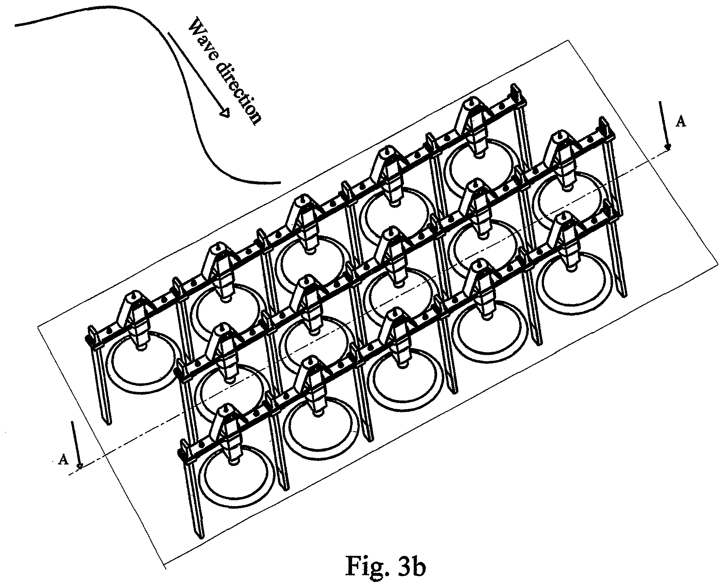

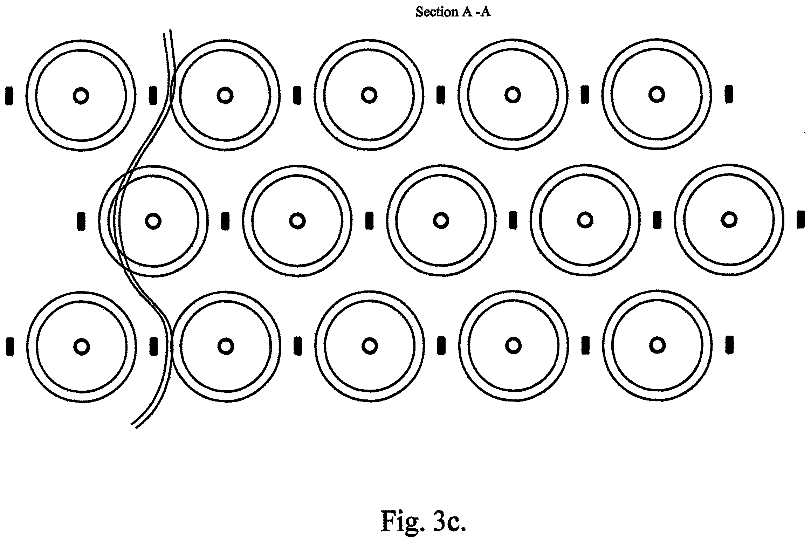

Fig. 3, unlike Fig. 1, has a stronger transmission shaft 2a which can be lattice-type, tubular or similar type. This transmission shaft is used to accept stronger lateral forces caused by strong winds and waves. The transmission shaft 2a moves through a bearing 16a which is secured to the beam 9, which can be moved by use of a specially controlled mechanism. The beam 9 moves only during the low and high tide, Thus the transmission, shaft 2a does next have to be too long. The induction coil is secured to the beam by the induction coil support 15a. The beam 9 can be shifted by a mechanism attached to it or to the column 7a. The column 7a is secured to the sea-bed at one of its ends.

Fig 3a is similar to Fig.3 except the parts are shown in an axonometric perspective.

Fig. 3b shows another arrangement, of the floating bodies in the direction of wave action. The number of floating bodies positioned in the direction of action of waves can be of a free choice depending on needs, and the number of the lines of the floating bodies depends on the size of waves. It is presumed that the floating bodies in the back line will be exposed to lower wave amplitudes, because the floating bodies in front lines will accept most of the energy. In this way besides electrical energy production, some parts of the coast or harbors, for example, can be protected.

Fig, 3c is a cross sectional view of Fig.3b A-a.

Fig, 4 differs from fig. 1 in following details: the floating body 1a is coupled to the transmission shaft 2b by use of a joint linkage. The transmission shaft is a gear rack which transmits vertical motion of the floating body to a mechanism 20 which converts linear motion into circular motion and transmits rotary moment to the generator for electrical energy production. This embodiment shows a schematic view of a bearing 16b which is used for proper leading of the transmission shaft 2b and to keep it coupled to its pair of mechanisms 20. The bearing 16b can be a sliding bearing, with a few pairs of roller bearings, with recirculation of the balls, for example. It can be positioned either below or over the beam 9. The best position is in front and behind the gear 18. The gear rack 2b transmits linear motion of the floating body 1a to the mechanism 20. In this embodiment a gear rack with vertical teeth is shown, although we suggest arrow-type or slant teeth in order to keep the system stable.
Operating mode: floating body 1a moves vertically under action of waves, and moves the transmission shaft 2b which is permanently in contact with the mechanism 20, which converts vertical motion of the floating body 1a into circular motion of the generator which generates electrical energy. Detailed description of the mechanism 20 is given in the following Figure.

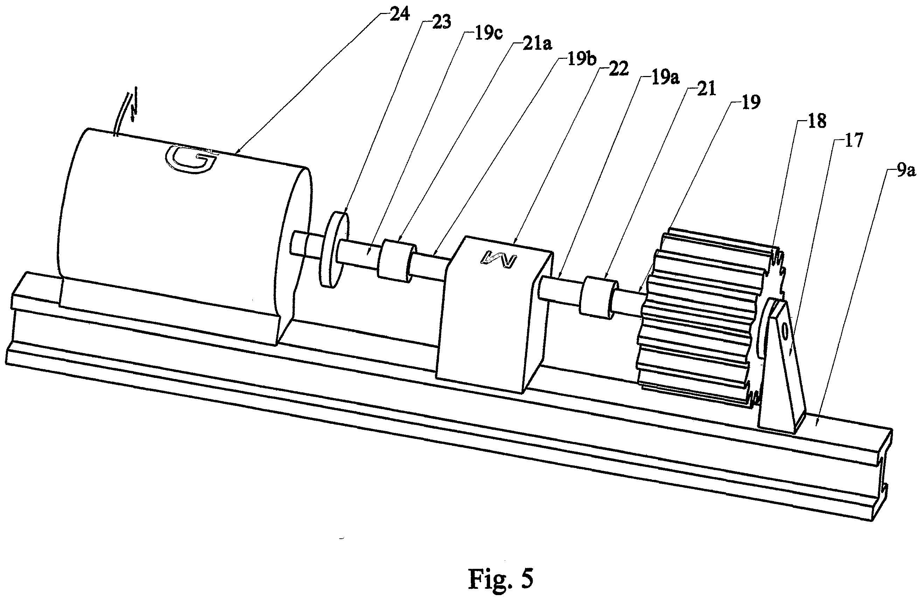

Fig. 5 shoes a mechanism for converting linear motion into circular motion and transmission of the rotary moment to the generator. The advantage of this solution, compared to previously described solutions is a very small number of machine parts, so the losses are minimal. For the first time one-way clutch for releasing transmission system in the transmission shaft return stroke 2b, is used. A gear 18 is secured to the beam 9a by use of one or two supports 17.

In contrast to the previously described embodiment, the electrical energy is here produced in a rotary generator 24. Incoming waves cause floating body 1a to rise and, through usage of joint 3 vertically shifts rack 2b upwardly. The vertical movement of rack 2b is converted into circular movement by means of a gear 18. Rotary motion of gear 18 is transmitted to one-way clutch 21 over shaft 19. One-way clutch 21 transmits the rotational force to one direction. Rotary motion from one-way clutch 21 is transmitted to multiplicator 22 by use of shaft 19, where the input rotation number of the shaft 19 is increased to the desired number of the projected generator 24. Multiplicator 22 can be very simple and can include one, two or more pairs of gears. Using multiplicator 22 the set number of revolutions with minimal loss can be realized. The rotational motion is transmitted from multiplicator 22 to a one-way clutch 21a by use of a shaft 19B and further by shaft 19c to flywheel 23. Flywheel 23 serves to maintain the inertia to keep generator rotating 24. Flywheel 23 can be positioned on either the left or right side of the generator 24. Rotating moment after flywheel 23 is transmitted to the generator 24 by use of a shaft and the electrical energy is produced. This is the simplest and the most efficient way of producing electrical energy so far, with small number of machine parts and minimal losses in the process of transmission of rotary moment to the generator. When the floating body reaches the upper dead center and starts moving downwards, rack 2b and the gear 18 change their direction. At that moment, clutch 21 disengages and shaft 19 rotates in the opposite direction, and shaft 19, because of inertia, keeps moving in the previous direction for a short time. In order to avoid negative impact of multiplicator 22 resistance on the rotation of generator 24 under influence of flywheel 23, a second one-way clutch 21a is used. The second one-way clutch 21a allows the generator shaft 19c to keep moving under the influence of the flywheel inertia. When floating body 1a reaches the bottom dead center and starts moving vertically upwards, the previously described process is repeated and electrical energy is being produced. In order to reduce losses in multiplicator, generator that operates with minimal rotations should be constructed. With small number of rotations, flywheel either loses its function, or it should be extremely heavy, in which case the mechanism 20 can be arranged in such way that the shaft 19b is directly coupled to the generator shaft 24. It means that mechanism 20 would not include flywheel 23. In this case the mechanism 20 would include gear 18, shaft 19, one-way clutch 21, shaft 19a, multiplicator 22, which can be one or two pairs of gears and shaft 19b, which is coupled to generator 24. To avoid rack being extremely long and to compensate for the tides, there are three possible solutions: 1) to use a telescopic rack, i.e. a rack of a variable length. The length can be varied hydraulically, pneumatically, electromechanically, for example; 2) vertical shifting of beam 9a along columns 7a which can be realized in a few familiar and adopted ways (hydraulically, pneumatically, electromechanically, or any other combination, for example); 3) variable height of columns 7a, which can be realized in a few familiar and adopted ways (hydraulically, pneumatically, electromechanically, or any other combination, for example).

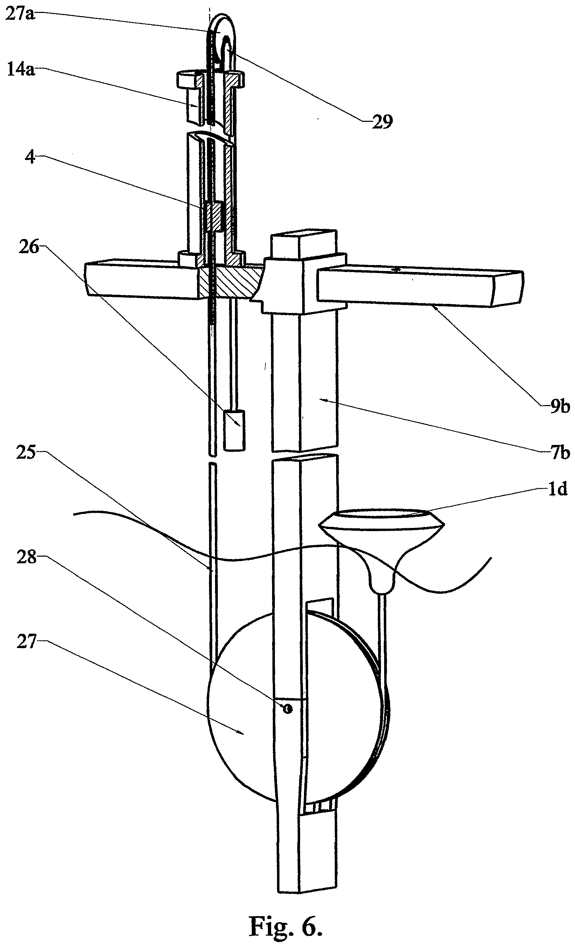

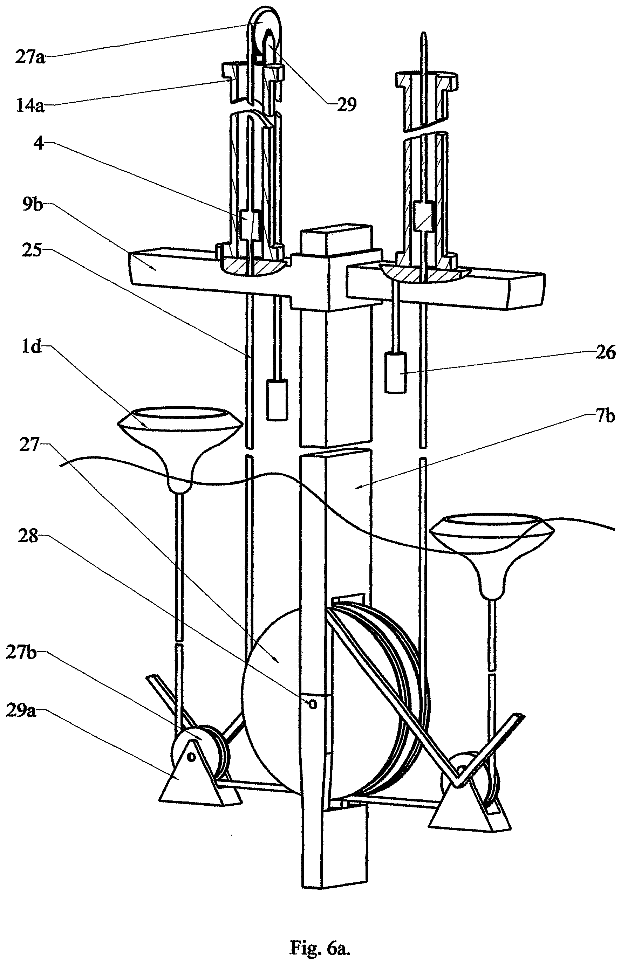

Fig. 6 shows the system for conversion of electrical energy which includes floating body 1d, which should be hermetically sealed on its upper side, with a transmission shaft 25 attached to its lower part. The transmission shaft embraces a pulley 27 and then moves upwardly towards a beam 9a with an induction coil 14a. The induction coil with a magnet 4 is attached to the flexible transmission shaft, which can be in the form of a cable, a chain or a strong rope for example. The magnet 4 is attached directly either to the transmission shaft 25 or to a rod coupled to the transmission shaft 25. After leaving the induction coil, the transmission shaft 25 moves over a smaller pulley 28a. In this arrangement the transmission shaft 25 has a weigh 26 which is used to maintain tension in transmission shaft while the pulley 27 is pivotally coupled to the column 7b. Maximal energy is generated when the magnet (permanent magnet) oscillates around the center of the induction coil 14a. To achieve oscillation around the center of the induction coil during high and low tide, the magnet 4 is moved vertically along the transmission shaft 25. The induction coil 14a, together with a beam 9b, can be moved as well. In this case, if the magnet is fixed to the transmission shaft 25, during high tide; the beam 9 moves downwards during low tide and vice versa.

Fig. 6A shows two floating bodies 1d which, over a transmission shaft 25, transmit motion to the magnet 4 in the induction coil 14a. This Figure shows a rationalized solution of placing parts of the system in space. In contrast to the previous solution, in this embodiment flexible working body moves over two pulleys 27, 27b.

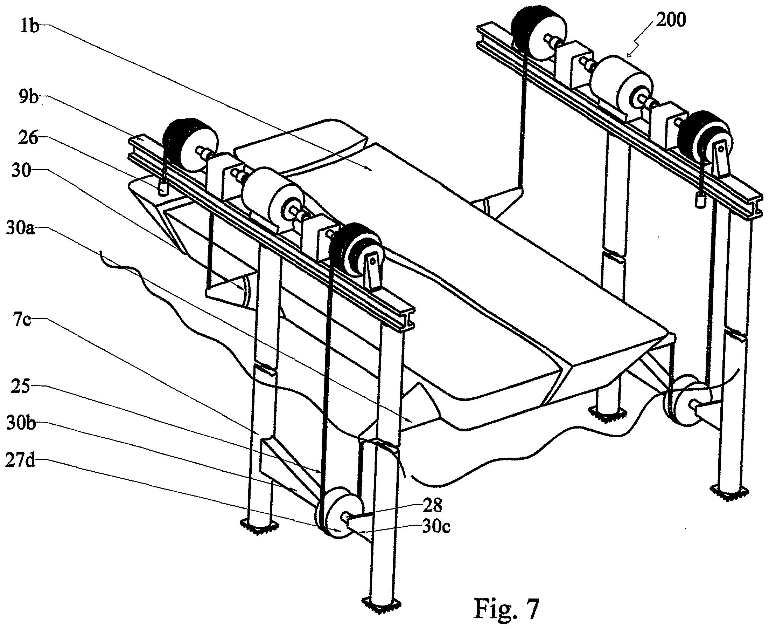

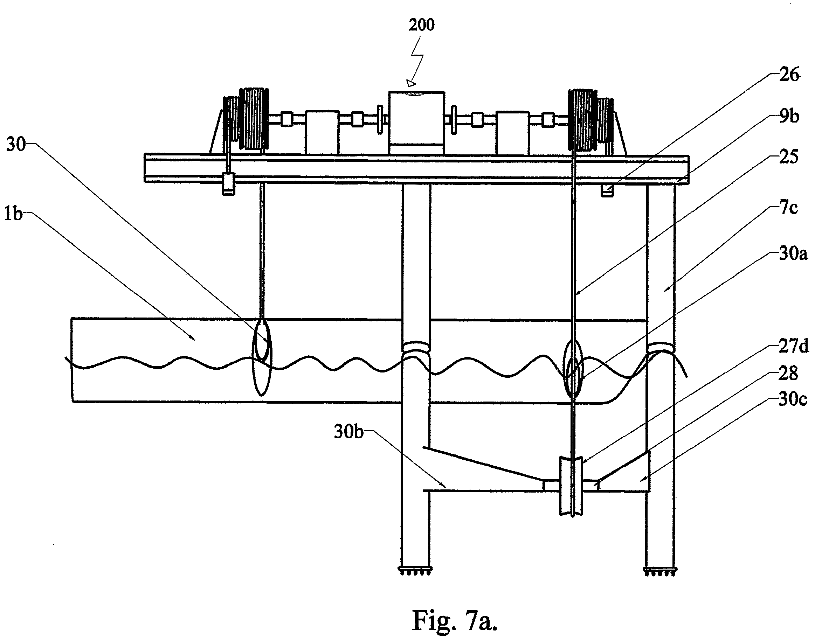

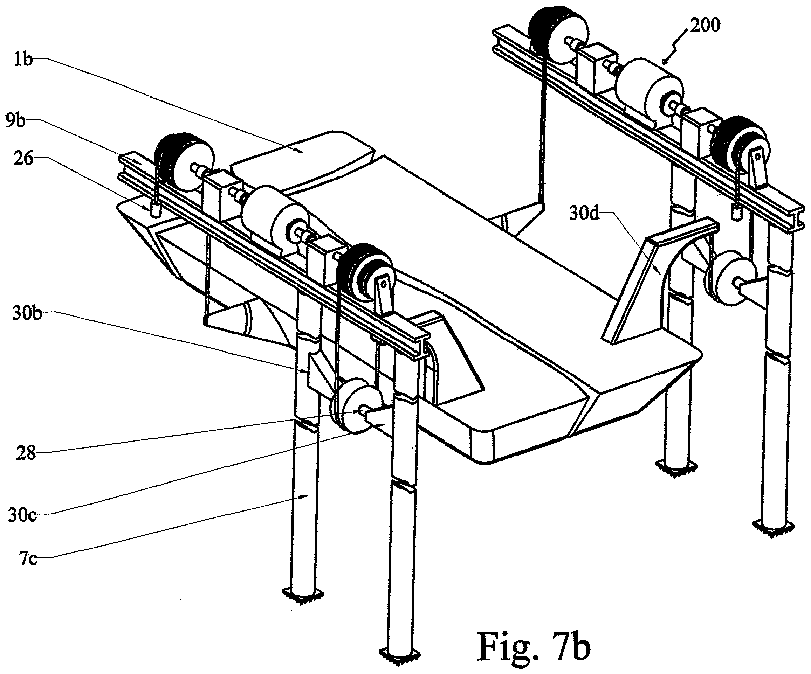

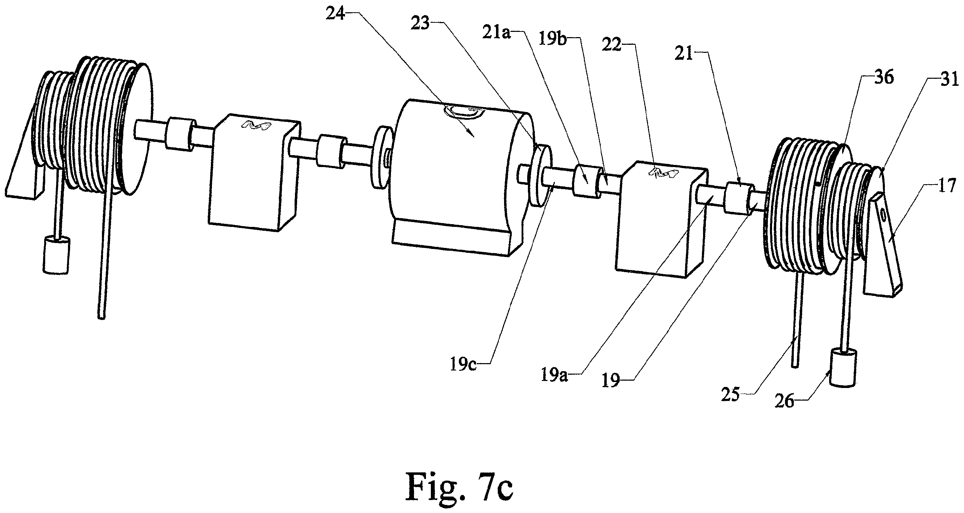

Another embodiment of the energy generation system is shown, for example, in Fig. 7. In this embodiment, electrical energy is produced by floating body 1b which is much larger than those previously discussed. Floating body 1b transmits its vertical movement over transmission shaft 25 to the pulley 27d and to the mechanism 200, which transforms linear motion into circular motion by use of previously described system of shafts and one-way clutches to the rotary generator which produces electrical energy.

Displayed floating body 1b is designed to be oriented in the water so that approaching waves engage its lateral face along its length, which is longer. Orientation of floating body 1b in this fashion provides for its natural stabilization and balance. The waves rotate the floating body and engage its longer, lateral face and thus provide maximal rocking. For this reason the floating body should be three to four times longer than its width and is preferably ten and more times longer than its width. If floating body 1b is wider than the waves it encounters the efficiency of the system decreases. The floating body 1b placed in such way requires minimal forces to maintain its position, there is no natural force to rotate the floating body 1b, and the maximum amplitude provides for the most energy. To increase the amplitude of floating body 1b and decrease losses, brackets 30, 30a can be used, as shown, for example, in Fig. 7. This is desirable because of the need to increase motion amplitude and maintain the distance of floating body 1b from fixed columns. However, floating body 1a can be constructed without brackets, in which case the cables are fixed directly to the floating body 1b. In this arrangement, more force in transmission shaft 25 (a cable) and lower amplitude is obtained. When the floating body moves vertically upwards, mechanism 200 is driven through transmission shaft 25 which is secured to bracket 30a. When the floating body moves vertically downwards, mechanism 200 is driven by transmission shaft 25, which is attached to bracket 30. It has to be mentioned that the force inside transmission shaft 25 is far much stronger when the floating body shifts upwards and it is proportional to the mass of displaced water attenuated for the mass of the floating body. When the floating body moves downwards and is driven through transmission shaft 25 secured to the bracket 30, the force is proportional to the mass of the floating body attenuated for the mass of displaced water. Weight 26 is used to keep tension in transmission shaft after the action of pulling force.

Pulley 27d of the system, shown in Fig. 7, can be placed either below or above the water surface. If pulley 27d is used above the water surface, the bracket 30d is similar to the bracket in Fig. 7B. Direct collision between bracket 30d and the pulley (27d) must be avoided.

Floating body 1b should be as long as possible, while the width depends on the length of the most frequent waves on the place where the floating body is positioned. Floating body 1b should be high enough in order to prevent waves to submerge the floating body during its rising and to obtain maximal utilization. It should be covered on the top because of rainfall. The columns are secured (fixed) to the ocean (sea) bottom.

Frame-type columns enable the placement of electrical energy production system together with all necessary equipment above floating body. Columns also enable positioning of pulley 27d, as shown, for example, in Fig. 7 which can be used to keep floating body in operating mode and at a safe distance from the columns. Notice: the force in the support of the pulley 27d is extremely strong. This happens when the floating body starts moving upwards, then, in the support of the pulley 27d, as shown, for example, in Fig. 7, two times stronger force than the force created by buoyancy of the platform in the point of action of the system for producing electrical energy, is created, so the pivot 28 and the brackets 30b, 30c have to be well dimensioned. Because of this and because of construction costs and cost of the device for electrical energy production, the optimal length of the floating body and number of units for electrical energy production placed on the platform by means of this system with flexible working body, should be discussed and found.

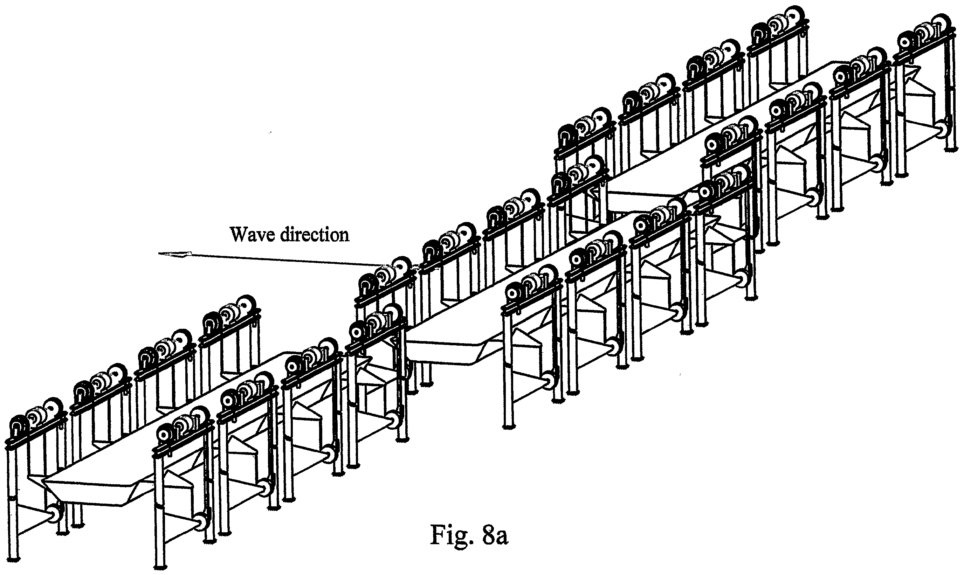

One way of placing the previous system in the direction of the waves is shown in Fig. 8a.

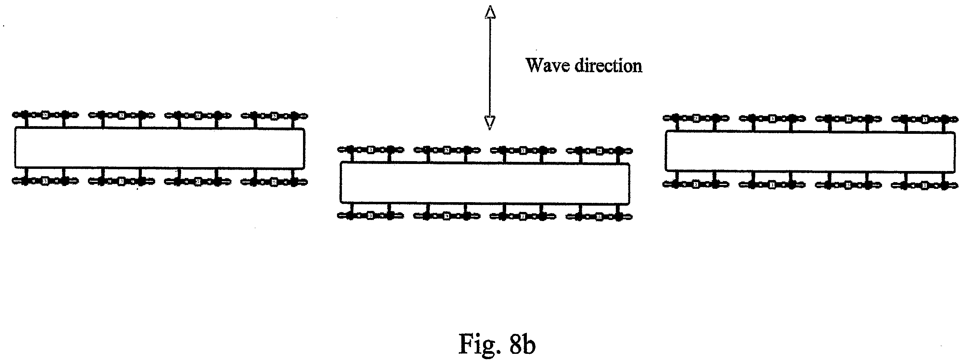

Fig. 8b is a top view of the system of Fig. 8.

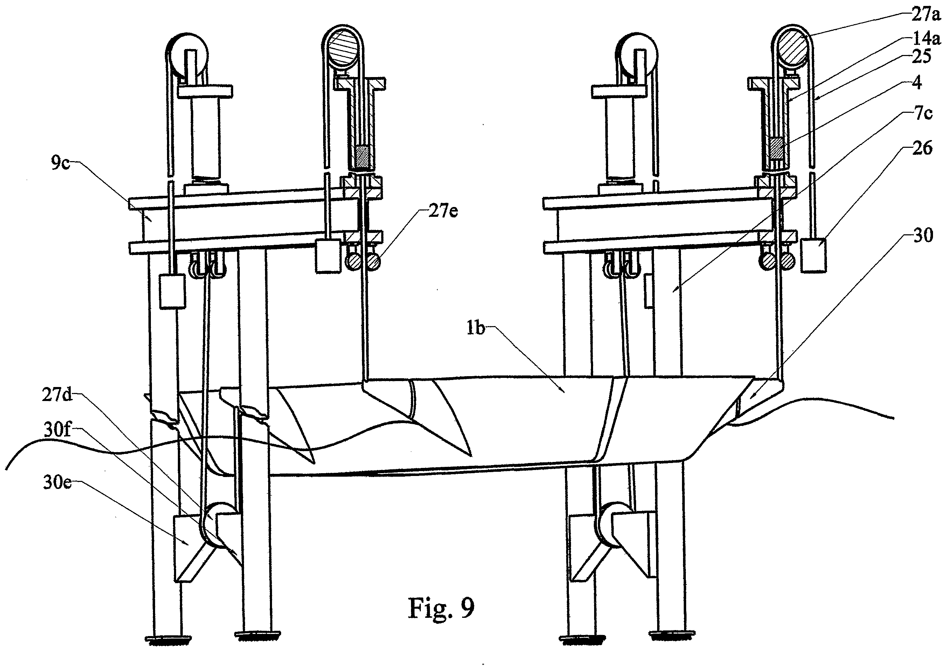

Fig. 9 is another embodiment of the energy generating system of Fig. 7. The difference is in the device for electrical energy production which has inductional coils instead of a generator.

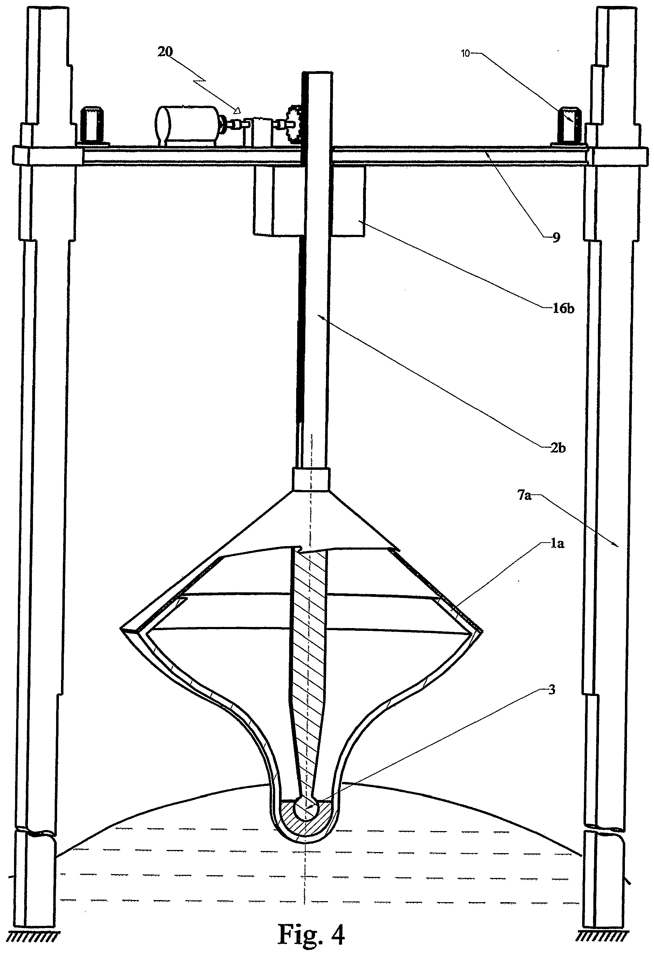

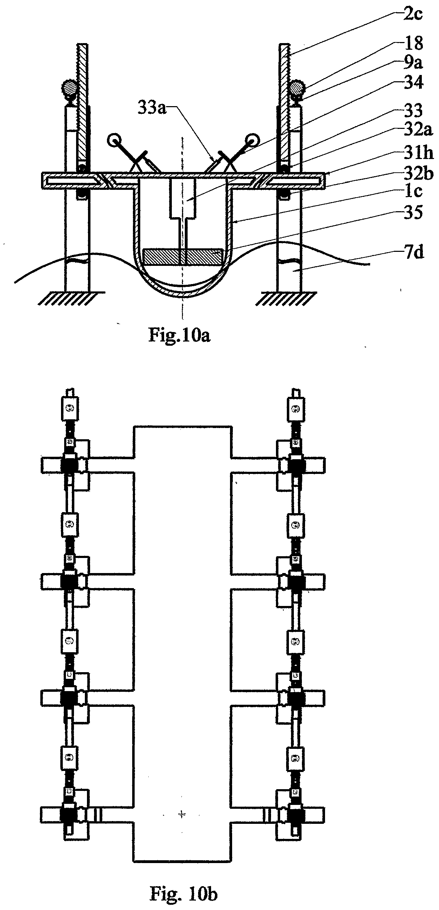

Another embodiment of the energy generating system of Fig. 4 is shown in Fig.10. The shape of the floating body 1c is a bit different, so it can be used for shorter waves.To increase the side rocking amplitude, and at the same time, the efective labour, additional mass 35 is placed in floating body 1c. The mass 65 is adapted to be shifted along the vertical axis of the floating body 1c, depending on the size of the waves. In this way it is possible to shift the center of the mass, and together with it, the lateral shifting amplitude which enables bigger output power of electrical energy from the generator. Shifting of the additional mass vertically can be performed hydraulically, pneumatically, electromechanically, combined system, for example. To prevent overturning of the floating body 1c, a system for controlling and limiting motion composed of counterbalance mass 34 is coupled to the floating body 2c and a hydraulic cylinder 33a. A supporting beam 31h on the floating body 1c represses transmission shaft 2c which is coupled to the pinion gear 18 of the conversion mechanism 20.

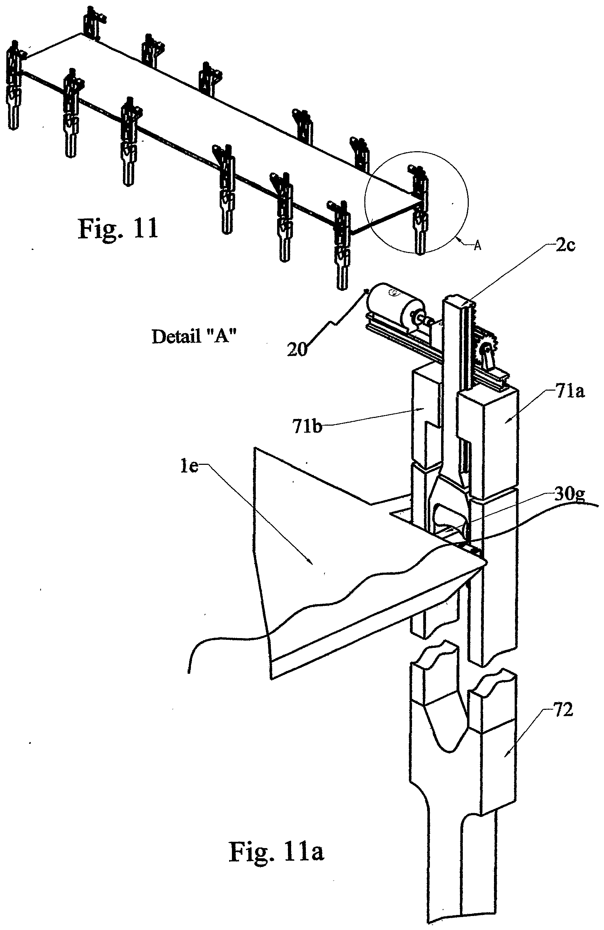

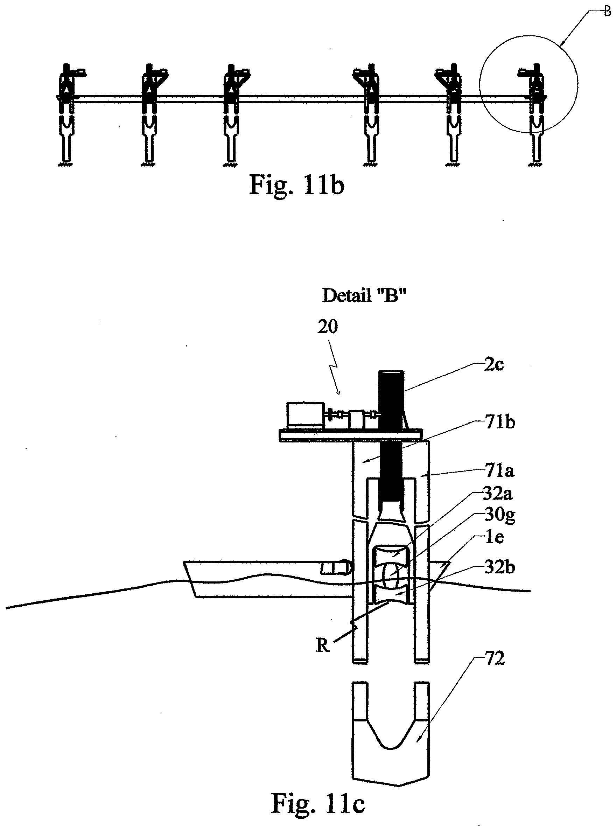

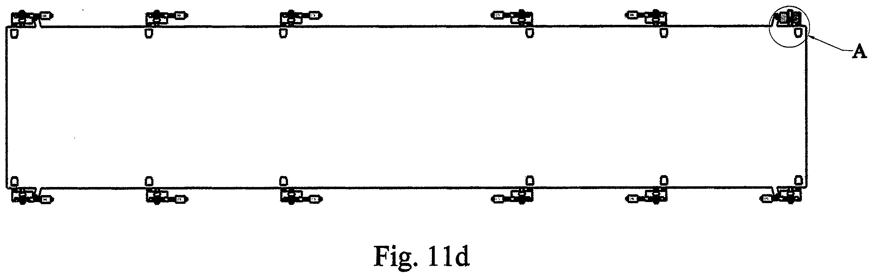

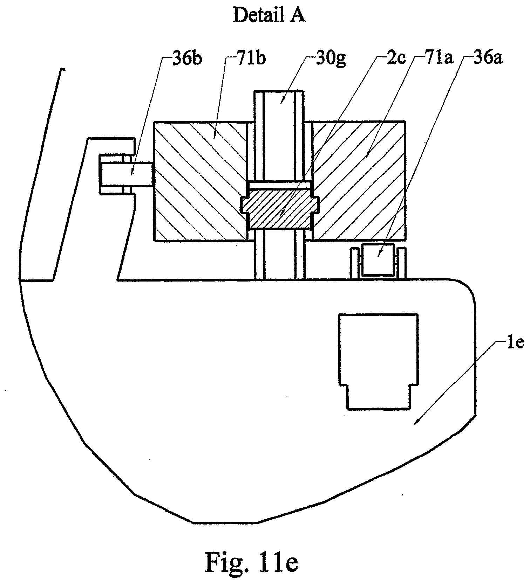

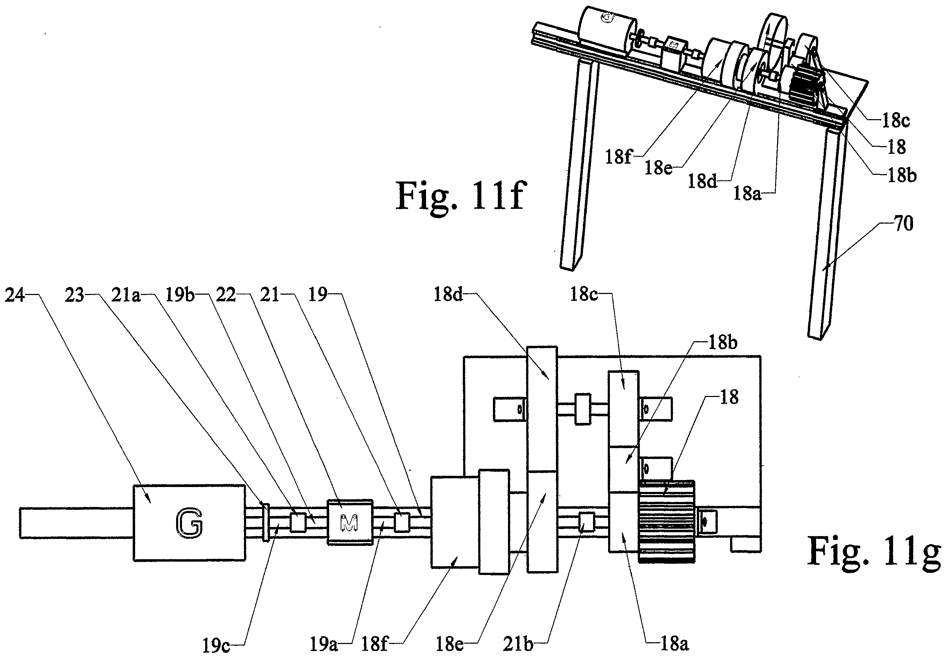

Fig. 11, 11a, 11b, 11c, 11d, 11e, 11f and 11g show another embodiment of the energy generating system of Fig. 4.

Fig. 11 shows a large floating body 1e which has a set of lateral energy generating systems on both longer sides of the floating body. Fig. 11d is a top view of the large floating body 2e and Fig.11b is a lateral view of large floating body 1e.

Fig.11a and 11c show the coupling of floating body 2e and the energy generating system by use of a transmission shaft 2c. To increase the amplitude of shifting of the floating body 2e, a bracket 30g is attacked. The bracket 30g is adapted to rest upon profiled cylinders 32a, 32b as shown in Fig 11c of Fig. 11a. Generating lines of profiled cylinders 32a, 32b are arc-shaped, as shown in Fig.11a. In this way selfalignment of the floating body 1e is obtained. The profiled cylinders 32a, 32b can have a variable diameters, but it is important not to cross the bending line of the bracket 30g. The profiled cylinders 32a, 32b permanently rest on the bracket 30g so the impact load could be avoided. This can be accomplished by the system of springs in the transmission shaft 2c, for example. The bracket 30g, by means of profiled cylinders 32a, 32b transmits linear motion to the transmission shaft 2c, and bearings secured to the column 71a provide proper resting of the transmission shaft 2c on the pinion gear 18 which trasforms linear motion of the transmission shaft 2c into circular motion of the mechanism for conversion. The floating body 1e includes at least four lateral support arms 36a, 36b which are used to prevent the bracket 30g from touching the transmission shaft 2c outside profiled cylinders 32a, 32b and to prevent the bracket from crossing the bending line. The support arms 36a, 36b should be constructed in such way to keep the floating body 1e in the operating position during rough sea conditions. Fig. 11c shows a mutual position of the cylinders 32a, 32b with respect to bracket 30g.

Fig. 11e shows that leading of the transmission shaft 2c is performed between parts 71a and 71b of the supporting column 70 which is fixed to the bottom of the ocean (sea) on the one side.

Fig. 11f is a perspective view of the system for running the generator 24 for electrical energy production which enables converting vertical motion of the floating body 1e in both directions (upwards and downwards) into useful rotation moment for running of the generator 24.

Fig. 11g is a detailed layout of the device. As the wave aproaches and the floating body 1e rises, the transmission shaft 2c shifts upwards, rotates a gear 18 in one direction. The achieved rotation moment is transmitted to the first one-way clutch 21b and further to the multiplicator 22 and further to the shaft 19b and the second one-way clutch 21a and to the generator 24. The one-way clutch 21b is realised and it does not transmit the rotating moment with this motion of the transmission shaft 2c. When the transmission shaft 2c starts moving downwards the gear 18 starts rotateing in the opposite direction. At this moment the one-way clutch 21b is released, and accepts the turning moment and transmits it to the multilicator 22 and further to the generator 24. To provide permanent rotation in the same direction at the entrance of the multiplicator 22 additional set of gears 18a, 18b,18c is used. A hollow shaft 18e in this case includes external gearing and a one-way clutch 21b. The hollow shaft 18e is fixed to the shaft.

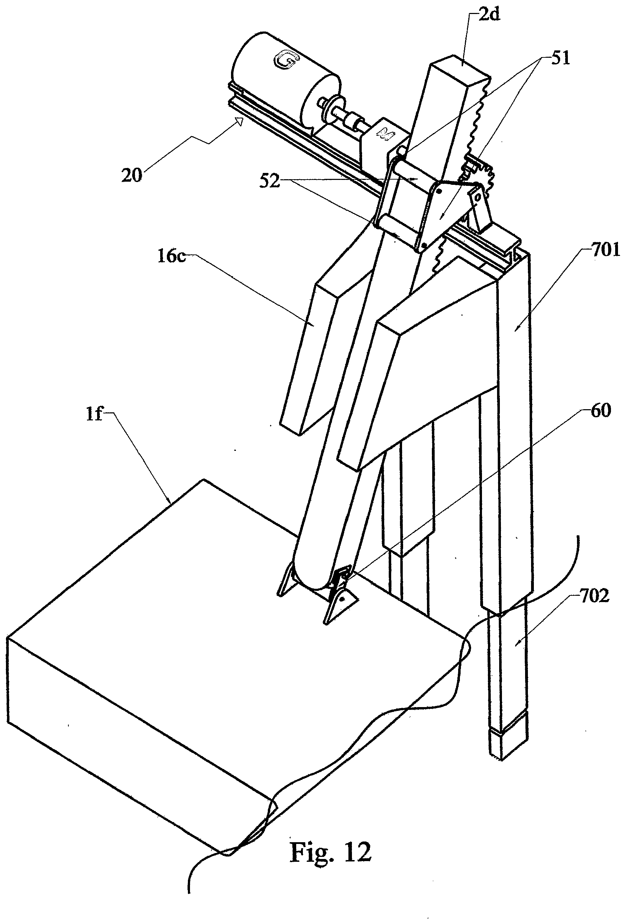

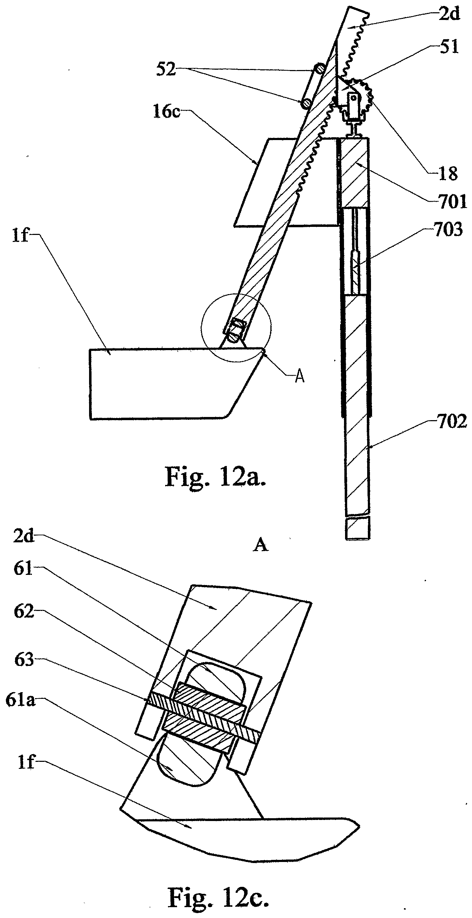

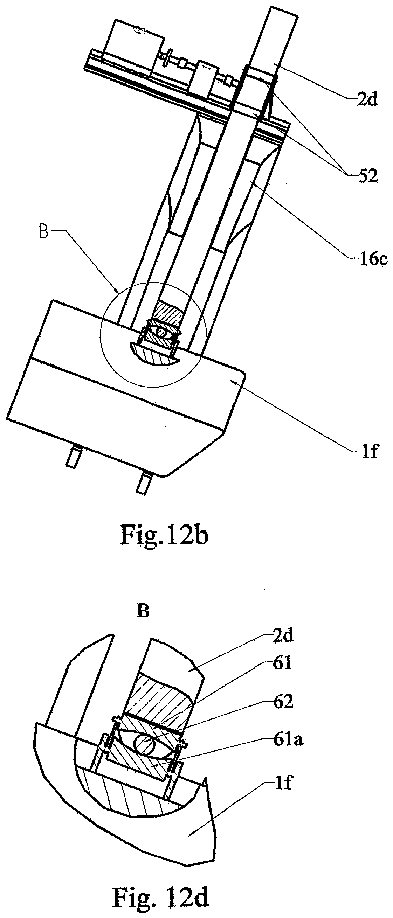

Fig. 12, 12a, 12b, 12c and 12d is another embodiment of the energy generating system of Fig.4.

Fig. 12 shows a portion of the floating body 1f with a transmission shaft 2d attached to it. Contrary to the previous versions, the motion of the floating working body 1f is transmitted to the transmission shaft 2d over arc prisms and the cylinder 60. Electrical energy is produced by the motion of the rack 2d. This system has already been described.

A direct connection of the rack 2d and the floating body 1f is shown in Fig. 12a. A support 51, together with the cylinders, that are in shape of a shackle, provides resting of the transmission shaft 2d on the gear 18. In this case, the support 51, which rotates around the same axis as the gear 18, includes two cylinders 52 which are coupled to the transmission shaft 2d. To prevent lateral movement of the transmission shaft 2d the transmission shaft 2d should be brought into bearing 16c that is secured to the column 700. The bearing 16c accepts lateral forces and enables motion of the transmission shaft 2d towards the column 700 and from the column 700. Selfalignment is accomplished by use of arc prisms 61, 61a as shown in details A and B of Fig. 12c and 12d.

Fig.12a is a hydraulic cylindr 703 in cross section. The height of the column 700 can be varied to account for tidal changes by use of a hydraulic cylinder. In this way the transmission shaft 2d does not have to be too long. The energy generating system has been previously described.

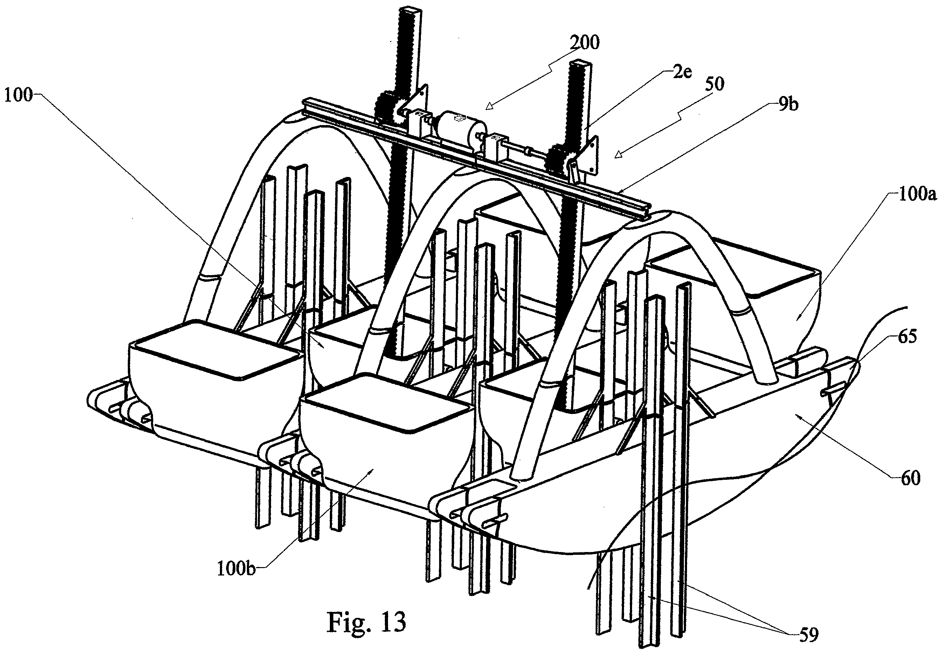

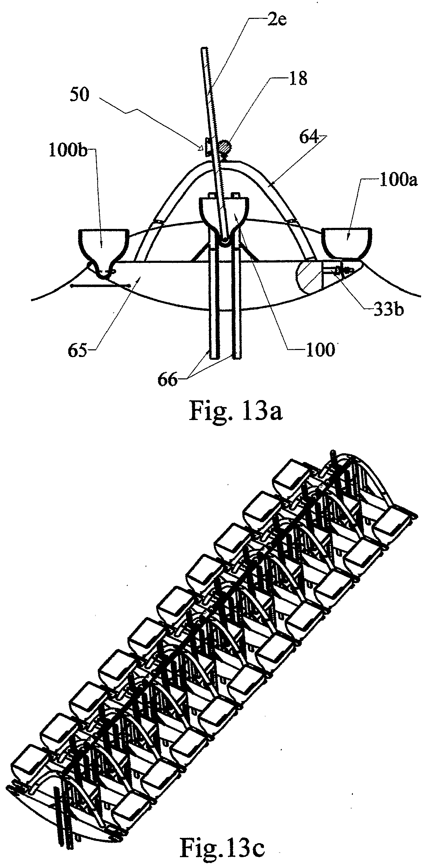

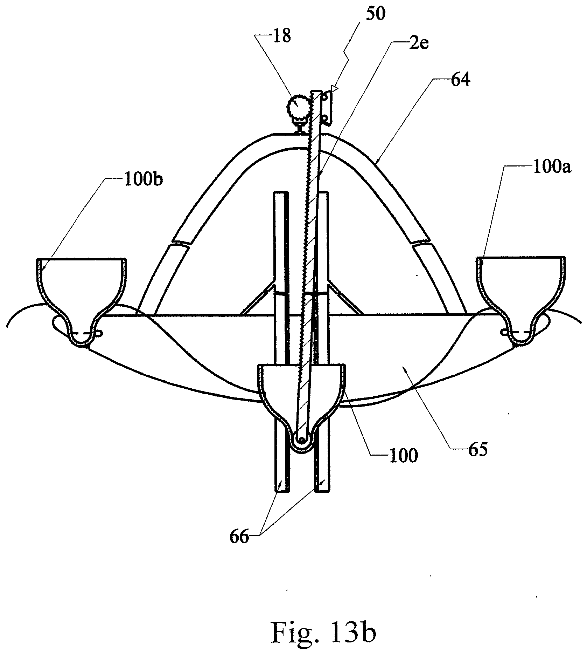

Fig. 13 shows a new approach to the utilization of wave energy. In this version the production of electrical energy from wave motion can be accomplished without any columns fixed to the sea-bed. One unit of this system includes two side floating bodies 100a, 100b and a central floating body 100. All floating bodies should be hermetically sealed. Floating body 100 should also be hermetically sealed, but free motion of the transmission shaft 2e with respect to surface of the floating body 100 should be allowed; this can be realized by a flexible membrane. At the bottom of the floating body 100 is a transmission shaft 2a support. Axis of two lateral cylindrical supports passes through the axis of the floating body support 100 which keeps the central floating body 100 in the center of the system. Transmission shaft 2e transmits motion to the upper system for electrical energy production, as it has already been described. The side floating bodies 100a, 100b are also, at their lowest point below the point of baricentar of displacement, coupled to lower construction of the system, a connecting support, for example, over a hollow overhang, so they can twist with respect to the lower construction. The side floating bodies 100a, 100b can consist either of individual units, as shown in Fig. 13, or one continual unit. Floating bodies 100a, 100b are coupled to the coupling support 65 over the lower construction by a hollow shaft. Since the wavelength can vary and since the desirable distance between lateral floats should be equal to the wavelength, the spacing of the floating bodies 100a, 100b can be varied by use of a device for extending and retracting side bodies, which is introduced in this embodiment. This can be done hydraulically, pneumatically, electromechanically, or combined system, for example. In the middle of the coupling support 65 two guides 66 should be placed. Between the guides 65, a hollow overhang of the central floating body would move. The clearance in this point should be a little bit wider to make jamming impossible although alignment between lower constructions will be done automatically by contact between the gear rack and the gear. Floating bodies 100a, 100b should be as light as possible and the coupling support 65 should have as weak resistance to vertical motion through water as possible. Coupling support 65 should extend into arc-type support 64 as shown in Fig.3, or a similar lattice-type construction, for example, to which upper system for electrical energy production would be secured, which can include a rotating generator or an induction coil as it has previously been described. The system in this arrangement is preferably longer than wider, as we have previously described, so the system could take the best position against the waves and to prevent the waves of twisting the system. The system is fixed to the sea-bed by use of an anchor, a massive body. In this arrangement the system for electrical energy does not damage sea-bed. In the future, when wireless energy transmission has been invested, units like this one could be positioned in different regions off the coast where the waves are high. The efficiency of this system should be higher because of the motion of the central floating body and the useful motion of the upper system.

Fig. 13 shows a portion of the system which can consist of as many individual units as we wish. Generator of mechanism for conversion 20 can be coupled to one or more floating bodies 100 over a transmission shaft 2e.

Fig. 13a shows central floating body 100 in its upper position.

Fig. 13b shows central floating body 100 in its lower position.

Fig. 13c shows possible positioning of the energy generating system in space while Fig. 13d shows a top view of one arrangement like this.

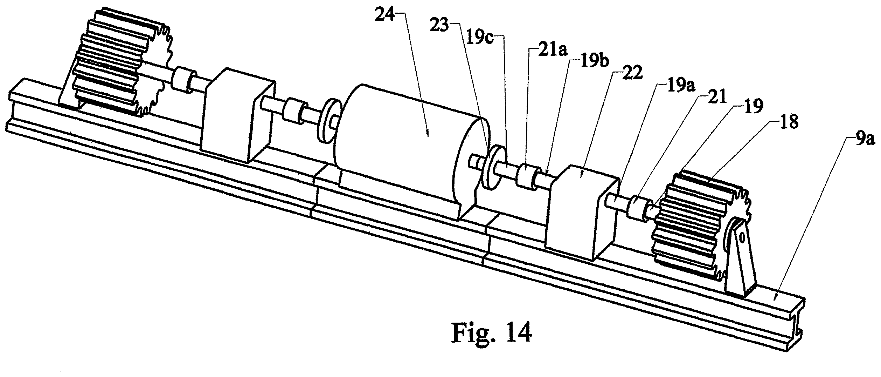

Fig.14 shows the system for electrical energy production placed on this version of the system for producing electrical energy from wave motion of Fig. 1

It has to be mentioned that high quality one-way clutches 21, 21a, which instantly accept rotating moment are available on the market. In case when, because of low angle speed of the pulley 31 and the gear 18, one-way clutch 21, 21a does not accept rotating moment instantly, a multiplicator or a spring system can follow the pulley 31 or gear 18 in order to avoid this one-way clutch defect.

## Claims

1. A wave power generating system with a support structure for installation on a sea bed, the wave power generating system being configured to produce electric power by converting a wave motion of a body of water of the sea to electric energy and comprising:
a floating body (1a) adapted to float on the body of water,
a transmission shaft (2, 2a, 2b), wherein a first end of the transmission shaft is coupled to the floating body, a second end of the transmission shaft is in communication with a motion translation device comprising an electric generator (24) for producing electric current when the transmission shaft is moved up and down by the wave motion of the body of water acting upon the floating body,
wherein the transmission shaft is constrained by the support structure to move linearly up and down above the floating body, and **characterised in that** the transmission shaft is coupled to the floating body below the central point of displacement of the floating body by use of a hinge (3).

2. The system according to claim 1, wherein the transmission shaft is configured to be inserted from above into the floating body

3. The system according to claim 1 or 2, wherein a flexible membrane extends over a top surface of the floating body to the transmission shaft to seal the floating body from the body of water.

4. The system according to any preceding claim, wherein the floating body is manufactured out of light weight material.

5. The system according to any preceding claim, wherein the floating body is hollow.

6. The system according to any preceding claim, wherein the floating body is symmetrically shaped with reference to an axis crossing a location wherein the transmission shaft is coupled to the floating body.

7. The system according to any preceding claim, wherein the floating body comprises an additional mass, wherein the additional mass is adapted to be movably located along a vertical axis of the floating body, wherein a specific location is related to a specific size of waves, or a range of wave sizes.

8. The system according to any preceding claim, wherein the floating body remains partly submerged during operation of the system.

9. The system according to any preceding claim, wherein the motion translation device comprises a movable magnet (4) located inside an induction coil (14), wherein the transmission shaft is secured to the magnet.

10. The system according to any of claims 1 to 8, wherein the motion translation device comprises a shaft (19) rotatable connected to the transmission shaft, wherein the shaft comprises a one-way clutch (21) being engaged either when the transmission shaft moves upwards or respectively downwards, when the one-way clutch is engaged a rotation of the shaft (19) is providing a rotation of a further shaft (19a) connected from the one-way clutch to an electric generator (24).

11. The system according to claim 10, wherein the motion translation device comprises at least two one-way clutches (21a, 21b), wherein a first of the at least two one-way clutches are engaged when the transmission shaft moves upwards from the sea bed providing a rotation of a first shaft in a first defined rotational direction, while a second one of the two one-way clutches at the same time is in a released state, when the transmission shaft moves downwards,
the first one-way clutch is released while the second one-way clutch is engaged providing a rotation of a second shaft in a second defined rotational direction, wherein a system comprising interconnected gears (18a, 18b, 18c) and the first and second shafts are providing a same rotational direction of the connected generator (24) irrespective of the direction of movement of the transmission shaft respectively up or down.

12. The system according to claim 10 or 11, wherein at least one one-way clutch (21a, 21b) is connected to the generator (24) via a rotation multiplier (22).

13. The system according to claim 10 or 11, wherein a shaft connected to the generator (24) comprises a flywheel (23).

14. The system according to any preceding claim, wherein the support structure comprises at least one horizontal support beam movably secured to vertical beams of the support structure, wherein the at least one horizontal beam supports the motion translation device, the electric generator and the transmission shaft, and wherein a movement of the at least one horizontal beam maintains the relative location between the motion translation device, the electric generator and the transmission member.

15. The system according to claim 14, wherein the at least one horizontal beam is moved vertically to provide a shortest possible length of the transmission shaft when the system is operated.

16. The system according to any proceeding claim, wherein the system comprises at least two floating bodies.

## Patentansprüche

1. Wellenkrafterzeugungssystem mit einer Stützkonstruktion zur Installation auf einem Meeresboden, wobei das Wellenkrafterzeugungssystem konfiguriert ist für die Erzeugung elektrischer Energie durch Umwandlung einer Wellenbewegung einer Wassermasse des Meeres in elektrische Energie und umfasst:
einen Schwimmkörper (1a), der geeignet ist zum Schwimmen auf der Wassermasse,
eine Übertragungswelle (2, 2a, 2b), wobei ein erstes Ende der Übertragungswelle mit dem Schwimmkörper verbunden ist, ein zweites Ende der Übertragungswelle mit einer Bewegungstranslationsvorrichtung in Verbindung steht, die einen elektrischen Generator (24) umfasst, zum Erzeugen von elektrischem Strom, wenn die Übertragungswelle durch die auf den Schwimmkörper wirkende Wellenbewegung der Wassermasse auf und ab bewegt wird,
wobei die Übertragungswelle durch die Stützkonstruktion auf eine lineare Auf- und Abbwegung über dem Schwimmkörper beschränkt ist,
**dadurch gekennzeichnet, dass** die Übertragungswelle mittels eines Gelenks (3) unter dem zentralen Verlagerungspunkt des Schwimmkörpers mit dem Schwimmkörper verbunden ist.

2. System nach Anspruch 1, wobei die Übertragungswelle derart konfiguriert ist, dass diese von oben in den Schwimmkörper eingesetzt wird.

3. System nach Anspruch 1 oder 2, wobei sich eine flexible Membrane über einer Oberseite des Schwimmkörpers zur Übertragungswelle erstreckt, um den Schwimmkörper gegenüber der Wassermasse abzudichten.

4. System nach einem der vorhergehenden Ansprüche, wobei der Schwimmkörper aus einem leichten Material hergestellt ist.

5. System nach einem der vorhergehenden Ansprüche, wobei der Schwimmkörper hohl ist.

6. System nach einem der vorhergehenden Ansprüche, wobei der Schwimmkörper in Bezug auf eine Achse, die einen Ort durchquert, an welchem die Übertragungswelle mit dem Schwimmkörper verbunden ist, symmetrisch geformt ist.

7. System nach einem der vorhergehenden Ansprüche, wobei der Schwimmkörper eine zusätzliche Masse umfasst, wobei die zusätzliche Masse geeignet ist für eine bewegliche Anordnung entlang einer vertikalen Achse des Schwimmkörpers, wobei sich ein bestimmter Ort auf eine bestimmte Größe von Wellen oder einen Bereich von Wellengrößen bezieht.

8. System nach einem der vorhergehenden Ansprüche, wobei der Schwimmkörper während des Betriebs des Systems teilweise untergetaucht bleibt.

9. System nach einem der vorhergehenden Ansprüche, wobei die Bewegungstranslationsvorrichtung einen beweglichen Magnet (4) umfasst, der sich in einer Induktionsspule (14) befindet, wobei die Übertragungswelle an dem Magnet befestigt ist.

10. System nach einem der Ansprüche 1 bis 8, wobei die Bewegungstranslationsvorrichtung eine Welle (19) umfasst, die mit der Übertragungswelle drehbar verbunden ist, wobei die Welle eine Einwegkupplung (21) aufweist, wobei die Einwegkupplung eingerückt wird, wenn sich die Übertragungswelle aufwärts bzw. abwärts bewegt, wobei, wenn die Einwegkupplung eingerückt wird, eine Drehung der Welle (19) für eine Drehung einer weiteren Welle (19a) sorgt, die ausgehend von der Einwegkupplung mit einem elektrischen Generator (24) verbunden ist.

11. System nach Anspruch 10, wobei die Bewegungstranslationsvorrichtung wenigstens zwei Einwegkupplungen (21a, 21b) umfasst, wobei eine erste der wenigstens zwei Einwegkupplungen eingerückt wird, wenn sich die Übertragungswelle von dem Meeresboden nach oben bewegt, wodurch für eine Drehung einer ersten Welle in einer ersten definierten Drehrichtung gesorgt wird, während sich eine zweite der beiden Einwegkupplungen gleichzeitig in einem ausgerückten Zustand befindet, wobei, wenn sich die Übertragungswelle nach unten bewegt, die erste Einwegkupplung ausgerückt und indessen die zweite Einwegkupplung eingerückt wird, wodurch für eine Drehung einer zweiten Welle in einer zweiten definierten Drehrichtung gesorgt wird, wobei ein System mit miteinander verbundenen Zahnrädern (18a, 18b, 18c) und die erste und die zweite Welle ungeachtet der Bewegungsrichtung der Übertragungswelle nach oben bzw. nach unten für die gleiche Drehrichtung des angeschlossenen Generators (24) sorgen.

12. System nach Anspruch 10 oder 11, wobei zumindest eine Einwegkupplung (21a, 21b) über einen Rotationsvervielfacher (22) mit dem Generator (24) verbunden ist.

13. System nach Anspruch 10 oder 11, wobei eine mit dem Generator (24) verbundene Welle ein Schwungrad (23) aufweist.

14. System nach einem der vorhergehenden Ansprüche, wobei die Stützkonstruktion wenigstens einen horizontalen Stützbalken umfasst, der an vertikalen Stützträgern der Stützkonstruktion beweglich befestigt ist, wobei der wenigstens eine horizontale Stützbalken die Bewegungstranslationsvorrichtung, den elektrischen Generator und die Übertragungswelle stützt und wobei eine Bewegung des wenigstens einen horizontalen Balkens die relative Position zwischen der Bewegungstranslationsvorrichtung, dem elektrischen Generator und dem Übertragungselement beibehält.

15. System nach Anspruch 14, wobei der wenigstens eine horizontale Balken vertikal bewegt wird, um für eine kürzest mögliche Länge der Ünertragungswelle zu sorgen, wenn das System betrieben wird.

16. System nach einem der vorhergehenden Ansprüche, wobei das System mindestens zwei Schwimmkörper umfasst.

## Revendications

1. Système permettant de générer de l'énergie à partir des vagues comprenant une structure support destinée à être montée sur un fond marin, ce système générateur d'énergie étant réalisé pour produire de l'énergie électrique en transformant le mouvement ondulaire d'une masse d'eau de mer en énergie électrique et comprenant :
un corps flottant (1a) susceptible de flotter sur la masse d'eau,
un arbre de transmission (2, 2a, 2b), une première extrémité de l'arbre de transmission étant couplée au corps flottant, et la seconde extrémité de l'arbre de transmission étant en communication avec un dispositif de conversion de mouvement comprenant un générateur électrique (24) permettant de produire du courant électrique lorsque l'arbre de transmission est déplacé de haut en bas par le mouvement ondulaire de la masse d'eau agissant sur le corps flottant,
l'arbre de transmission étant forcé par la structure support de se déplacer linéairement de haut en bas au dessus du corps flottant, et
**caractérisé en ce que**
l'arbre de transmission est couplé au corps flottant au-dessous de son point de déplacement médian en utilisant une articulation (3).

2. Système conforme à la revendication 1,
dans lequel l'arbre de transmission est réalisé pour pouvoir être inséré par le dessus dans le corps flottant.

3. Système conforme à la revendication 1 ou 2,
dans lequel une membrane flexible s'étend sur la surface supérieure du corps flottant vers l'arbre de transmission pour fermer hermétiquement ce corps flottant par rapport à la masse d'eau.

4. Système conforme à l'une quelconque des revendications précédentes,
dans lequel le corps flottant est réalisé en un matériau léger.

5. Système conforme à l'une quelconque des revendications précédentes,
dans lequel le corps flottant est creux.

6. Système conforme à l'une quelconque des revendications précédentes,
dans lequel le corps flottant est symétrique par rapport à un axe passant par l'emplacement au niveau duquel l'arbre de transmission est couplé à ce corps flottant.

7. Système conforme à l'une quelconque des revendications précédentes,
dans lequel le corps flottant comporte une masse supplémentaire, cette masse supplémentaire étant susceptible d'être positionnée de manière mobile le long de l'axe vertical du corps flottant, une position spécifique étant en fonction de la taille spécifique des vagues ou de la plage des dimensions des vagues.

8. Système conforme à l'une quelconque des revendications précédentes,
dans lequel le corps flottant reste partiellement submergé au cours du fonctionnement du système.

9. Système conforme à l'une quelconque des revendications précédentes,
dans lequel le dispositif de conversion de mouvement comporte un aimant mobile (4) situé à la partie interne d'une bobine d'induction (14), l'arbre de transmission étant fixé à cet aimant.

10. Système conforme à l'une quelconque des revendications 1 à 8,
dans lequel le dispositif de conversion de mouvement comporte un arbre rotatif (19) relié à l'arbre de transmission, l'arbre comprenant un embrayage unidirectionnel (21) en prise lorsque l'arbre de transmission se déplace vers le haut ou respectivement vers le bas, lorsque l'embrayage unidirectionnel est en prise, la rotation de l'arbre (19) entraînant la rotation d'un autre arbre (19a) relié par l'embrayage unidirectionnel à un générateur électrique (24).

11. Système conforme à la revendication 10,
dans lequel le dispositif de conversion de mouvement comporte au moins deux embrayages unidirectionnel (21a, 21b) lorsque l'arbre de transmission se déplace vers le haut à partir du fond marin un premier embrayage unidirectionnel étant en prise en entraînant la rotation d'un premier arbre dans un premier sens de rotation défini, tandis que le second embrayage unidirectionnel, est, simultanément à l'état dégagé, lorsque l'arbre de transmission se déplace vers le bas, le premier embrayage unidirectionnel étant dégagé tandis que le second embrayage unidirectionnel est en prise en entraînant la rotation d'un second arbre dans un second sens de rotation défini,
un système comprenant des engrenages interconnectés (18a, 18b, 18c) et le premier arbre et le second arbre permettant d'obtenir un même sens de rotation du générateur connecté (24) quel que soit le sens de déplacement de l'arbre de transmission respectivement vers le haut ou vers le bas.

12. Système conforme à la revendication 10 ou 11,
dans lequel au moins l'un des embrayages unidirectionnel (21a, 21b) est connecté au générateur (24) par l'intermédiaire d'un multiplicateur de rotation (22).

13. Système conforme à la revendication 10 ou 11,
dans lequel un arbre relié au générateur (24) comporte un volant (23).

14. Système conforme à l'une quelconque des revendications précédentes, dans lequel la structure support comporte au moins une poutre support horizontale fixée de manière mobile à des poutres verticales de cette structure support, la poutre horizontale supportant le dispositif de conversion de mouvement, le générateur électrique et l'arbre de transmission, et un déplacement de la poutre horizontale maintenant la position relative du dispositif de conversion de mouvement, du générateur électrique et l'élément de transmission.

15. Système conforme à la revendication 14,
dans lequel la poutre horizontale se déplace verticalement pour permettre d'obtenir la plus petite longueur possible de l'arbre de transmission lorsque le système fonctionne.

16. Système conforme à l'une quelconque des revendications précédentes, comprenant au moins deux corps flottants.
